# DEMANDE DE BREVET EUROPEEN

(11) **EP 0 892 454 A1**
(43) Date de publication de la demande: **20.01.1999**
(21) Numéro de dépôt: 98401752.5
(22) Date de dépôt: 09.07.1998
(51) Int. Cl.: H01M 10/40, H01M 2/16

(54) **Séparateur polymérique, procédé de fabrication et générateur électrochimique le comprenant**

(30) Priorité: 17.07.1997 FR 9709072
(71) Demandeur: ALCATEL ALSTHOM COMPAGNIE GENERALE D'ELECTRICITE, 75008 Paris (FR)
(72) Inventeur: Boudin, François, 91290 Arpajon (FR); Olsen, Ib Ingemann, Cockeysville, Maryland 21030 (US); Andrieu, Xavier, 91220 Bretigny sur Orge (FR)
(74) Mandataire: Laroche, Danièle

(57) **Abrégé**

L'invention concerne un séparateur polymérique pour système électrochimique à électrolyte organique.

Ce séparateur est constitué de
a) un polymère élastomère,
b) éventuellement un polymère qui gonfle avec l'électrolyte organique et avec lequel le polymère élastomère forme un alliage, et
c) éventuellement un composé inorganique,
le séparateur polymérique étant doté d'une structure microporeuse caractérisée par une porosité comprise entre 30 et 95 % et des pores d'un diamètre moyen compris entre 0,1 et 5 µm.

L'invention s'étend en outre au procédé de fabrication du séparateur décrit précédemment, au générateur électrochimique le comprenant et au procédé de fabrication du générateur électrochimique le comprenant.

## Description

La présente invention concerne un séparateur polymérique pour système électrochimique à électrolyte organique, ainsi que son procédé de fabrication.

Elle s'étend en outre à un générateur électrochimique comprenant le séparateur de l'invention et à un procédé de fabrication d'un générateur électrochimique comprenant ledit séparateur.

Les systèmes électrochimiques, en particulier les générateurs et les supercondensateurs, à électrolyte organique dit "solide", sont constitués d'électrodes encadrant une couche de matériau isolant électrique poreux imprégnée d'électrolyte, appelée séparateur.

Ce séparateur doit posséder une bonne tenue mécanique intrinsèque et une bonne affinité avec l'électrolyte organique. Les matériaux polymères, en particulier, le polyfluorure de vinylidène (PVDF), répondent à ces deux critères et sont classiquement utilisés pour constituer le séparateur.

En particulier, le polyfluorure de vinylidène (PVDF) est largement utilisé. Il a été cependant observé, qu'en séchant, un séparateur à base de PVDF subit des variations dimensionnelles importantes qui peuvent se traduire par un décollement de l'électrode et du séparateur, voir de l'électrode et du collecteur de courant métallique.

La présente invention propose un séparateur polymérique pour système électrochimique à électrolyte organique dont les variations dimensionnelles sont minimisées, en remplaçant tout ou partie du PVDF par un polymère élastomère ou par un alliage d'un polymère élastomère avec un polymère qui gonfle avec l'électrolyte.

La présente invention a en effet pour objet un séparateur polymérique pour système électrochimique à électrolyte organique constitué de
a) un polymère élastomère,
b) éventuellement un polymère qui gonfle avec l'électrolyte organique et avec lequel le polymère élastomère forme un alliage, et
c) éventuellement un composé inorganique,
le séparateur polymérique étant doté d'une structure microporeuse caractérisée par une porosité comprise entre 30 et 95 % et des pores d'un diamètre moyen compris entre 0,1 et 5 µm.

Le diamètre moyen des pores est de préférence de l'ordre de 1 µm.

Le polymère élastomère a pour rôle d'améliorer les propriétés mécaniques du séparateur en limitant les variations dimensionnelles.

Le polymère élastomère peut être choisi parmi les polyuréthanes, un copolymère acrylonitrile/butadiène, un copolymère styrène/butadiène/styrène, un copolymère styrène/isoprène/styrène, les polyesters et les polyéthers blocs amides.

Le polymère élastomère, dont la fonction première est d'améliorer les propriétés mécaniques du séparateur, peut avantageusement gonfler avec l'électrolyte organique. Un exemple d'un tel polymère élastomère est le polycarbonate-uréthane.

Le polymère qui gonfle avec l'électrolyte organique doit avoir une certaine affinité avec l'électrolyte sans toutefois se dissoudre dans l'électrolyte à des températures comprises entre 50 et 80°C.

Le polymère qui gonfle avec l'électrolyte organique peut être choisi parmi le polyfluorure de vinylidène et ses copolymères, le polyacrylonitrile, le polyméthacrylate de méthyle, le polyvinylformal, le polyméthacrylate de butyle et le polychlorure de vinyle.

Le composé inorganique, comme la silice, permet à la fois d'améliorer les propriétés mécaniques et les propriétés d'absorption du séparateur.

Le séparateur polymérique selon l'invention contient avantageusement 40 à 100 % de polymère élastomère, 0 à 60 % de polymère qui gonfle avec l'électrolyte et 0 à 20 % de composé inorganique.

La présente invention concerne également le procédé de fabrication du séparateur polymérique décrit précédemment.

Le procédé de l'invention est avantageusement basé sur un mécanisme d'inversion de phase du ou des polymères choisis pour constituer le séparateur.

Une première variante du procédé de l'invention, dite "par immersion", comprend les étapes suivantes :
- on élabore une solution constituée du polymère élastomère, éventuellement du polymère qui gonfle avec l'électrolyte organique, et éventuellement du composé inorganique, dissous dans un solvant commun aux deux polymères,

on étale ladite solution sur un support sous forme d'un film,
on immerge ledit film dans un non-solvant miscible avec ledit solvant,
on sèche ledit film pour éliminer ledit solvant et ledit non-solvant.

Une deuxième variante du procédé de l'invention, dite "par évaporation", comprend les étapes suivantes :
on élabore une solution constituée du polymère élastomère, éventuellement du polymère qui gonfle avec l'électrolyte organique, et éventuellement du composé inorganique, préalablement dissous dans un solvant commun aux deux polymères, au(x)quel(s) on ajoute un non-solvant, miscible avec ledit solvant, dans une proportion insuffisante pour provoquer la précipitation du ou des polymères,
on étale ladite solution sur un support sous forme d'un film,
on sèche ledit film pour éliminer ledit solvant et ledit non-solvant.

On entend par "solvant" un solvant organique dans lequel le ou les polymères se dissolvent sans difficulté, et qui peut être facilement éliminé par chauffage à une température modérée.

On entend par "non-solvant", un liquide dans lequel le ou les polymères ne sont pas solubles (non-solvant fort) ou bien sont très peu solubles (non-solvant faible) à la température d'opération. Dans le cas où le non-solvant choisi est l'eau pure ou en mélange, cette température est comprise entre 5°C et 80°C.

Dans le cadre de la deuxième variante du procédé de fabrication du séparateur selon l'invention, la solution peut être préalablement chauffée avant d'être étalée sur le support.

Le point d'ébullition du solvant est de préférence inférieur au point d'ébullition du non-solvant. Ainsi, au cours du phénomène d'évaporation, la solution s'enrichit en non-solvant jusqu'à ce que la phase polymérique devienne insoluble dans la phase liquide et précipite.

La solution est étalée sur le support par une méthode connue comme l'immersion, l'enduction ou la pulvérisation.

Dans le cadre des première et deuxième variantes du procédé de l'invention, le solvant est choisi de telle manière qu'il dissout le polymère élastomère, le polymère qui gonfle avec l'électrolyte organique, lorsqu'on en utilise un, et 15 à 30 % de l'alliage de polymères.

Le solvant est un solvant organique choisi parmi la cyclohexanone, le dichlorométhane, la diméthylacétamide (DMA), la diméthylformamide (DMF), l'hexaméthylphosphoramide (HMPA), la diméthylsulfoxyde (DMSO), le triéthylphosphate (TEP), la N-méthylpyrrolidone (NMP) et leurs mélanges.

Le non-solvant est choisi parmi l'eau, l'éthanol, l'éthylène glycol, le glycérol, l'acétone, le carbonate de propylène, le dichlorométhane, l'acétate d'éthyle, le butanol, le pentanol, l'acétonitrile et leurs mélanges.

Si le non-solvant choisi est l'eau, le procédé selon l'invention a l'avantage de ne pas être polluant pour l'environnement et de faciliter le recyclage des solvants.

Le ou les polymères sont mis en solution concentrée dans le solvant. La concentration en polymère(s) est l'un des paramètres qui conditionne la porosité du film. Cette concentration ne doit pas être trop élevée. Il est préférable que la solution contienne au moins 50 % de solvant.

De préférence, on sèche le film en deux étapes, tout d'abord à une température comprise entre 20 et 60°C, puis à une température comprise entre 80 et 140°C.

Selon une troisième variante du procédé de fabrication du séparateur de l'invention, l'inversion de phase est réalisée par cryoprécipitation.

Dans le cadre des première et deuxième variantes du procédé de fabrication par inversion de phase du séparateur, le support est avantageusement une plaque d'un matériau chimiquement inerte que l'on sépare du film une fois séché.

Lorsque le système électrochimique à électrolyte organique comprend au moins deux électrodes comportant chacune une couche poreuse contenant un matériau électrochimiquement actif et un liant, le support est avantageusement la couche poreuse de l'une desdites électrodes ou la couche poreuse de chacune desdites électrodes.

Dans le cas où le support est la couche poreuse de l'une desdites électrodes, on obtient une électrode bifonctionnelle, ladite électrode comprenant une première couche poreuse électroniquement conductrice recouverte d'une deuxième couche microporeuse constituant le séparateur.

Dans le cas où le support est la couche poreuse de chacune desdites électrodes, on obtient deux électrodes bifonctionnelles, chacune d'elles comprenant une première couche poreuse électroniquement conductrice recouverte d'une deuxième couche microporeuse constituant une des moitiés du séparateur.

La présente invention concerne également un générateur électrochimique à électrolyte organique comprenant le séparateur de l'invention susceptible d'être obtenu par l'une des trois variantes du procédé décrit précédemment.

Le générateur électrochimique de l'invention comporte une électrode, anode ou cathode, et une contre-électrode de type classique.

Le générateur électrochimique contient avantageusement un électrolyte qui comprend un sel de lithium dissout dans un solvant organique.

Le sel de lithium est choisi parmi le perchlorate de lithium LiClO₄, l'hexafluoroarsénate de lithium LiAsF₆, l'hexafluorophosphate de lithium LiPF₆, le tétrafluoroborate de lithium LiBF₄, le trifluorométhanesulfonate de lithium LiCF₃SO₃, le trifluorométhanesulfonimide de lithium LiN(CF₃SO₂)₂, et le trifluorométhanesulfoneméthide de lithium LiC(CF₃SO₂)₃.

Le solvant organique est constitué d'un mélange d'éthers et/ou d'esters, les esters étant choisis parmi les carbonates linéaires, et les carbonates cycliques de plus de quatre atomes de carbone, comme par exemple les carbonates de propylène, d'éthylène, de butylène, de diéthyle, de diméthyle, et leurs mélanges.

Le générateur électrochimique comporte avantageusement une anode dont le matériau électrochimiquement actif est le carbone, une cathode dont le matériau électrochimiquement actif est un oxyde de métal de transition, comme l'oxyde mixte de nickel et de lithium (LiNiO₂), et un électrolyte à base d'esters cycliques.

La présente invention a pour objet un procédé de fabrication d'un générateur électrochimique à électrolyte organique. Ledit procédé est réalisé soit par thermocollage, soit par collage, soit par simple assemblage des éléments constituant le générateur.

La présente invention concerne un procédé de fabrication d'un générateur électrochimique à électrolyte organique, comprenant :
. au moins deux électrodes comportant chacune une couche poreuse contenant un matériau électrochimiquement actif et un liant,
. le séparateur de l'invention susceptible d'être obtenu par le procédé décrit précédemment,
caractérisé en ce qu'il comprend une étape d'assemblage dudit séparateur et desdites électrodes pour former un couple électrochimique comprenant ledit séparateur disposé entre lesdites deux électrodes du côté de leur couche poreuse.

La présente invention concerne premièrement un procédé de fabrication d'un générateur électrochimique par thermocollage.

Un premier mode de mise en oeuvre du procédé comprend les étapes suivantes :
. on imprègne lesdites électrodes du côté de leur couche poreuse et on imprègne le séparateur, avec ledit électrolyte,
. on réalise ladite étape d'assemblage en accolant le séparateur avec l'une et l'autre desdites électrodes, du côté de leur couche poreuse.

Selon ce premier mode de mise en oeuvre, le séparateur peut avantageusement être fabriqué selon le procédé de l'invention en choisissant comme support une plaque d'un matériau chimiquement inerte que l'on sépare du film une fois séché.

Un deuxième mode de mise en oeuvre du procédé de fabrication du générateur électrochimique de l'invention comprend les étapes suivantes :
. on fabrique le séparateur selon le procédé de l'invention en choisissant comme support la couche poreuse de l'une desdites électrodes, de telle sorte que l'une desdites électrodes est recouverte du séparateur du côté de sa couche poreuse, et que le séparateur comprend une face libre,
. on imprègne le séparateur du côté de sa face libre avec ledit électrolyte,
. on imprègne l'autre desdites électrodes du côté de sa couche poreuse avec ledit électrolyte,
. on réalise l'étape d'assemblage en accolant le séparateur, du côté de sa face libre, et l'autre desdites électrodes, du côté de sa couche poreuse.

Un troisième mode de mise en oeuvre du procédé de fabrication du générateur électrochimique de l'invention comprend les étapes suivantes :
. on fabrique le séparateur selon le procédé de l'invention en choisissant comme support la couche poreuse de chacune desdites électrodes, de telle sorte que chacune desdites deux électrodes est recouverte d'une moitié de séparateur du côté de sa couche poreuse, et que chaque moitié de séparateur comprend une face libre,
. on imprègne chaque moitié de séparateur, du côté de sa face libre, avec ledit électrolyte,
. on réalise l'étape d'assemblage en accolant les moitiés de séparateur du côté de leur face libre.

Après l'étape d'assemblage de l'un des modes de mise en oeuvre précédents, on presse le couple électrochimique en le portant à une température inférieure ou égale à la température de début de fusion du séparateur imprégné d'électrolyte.

La présente invention concerne un procédé de fabrication d'un générateur électrochimique par collage.

En effet, un quatrième mode de mise en oeuvre du procédé de fabrication du générateur électrochimique de l'invention comprend les étapes suivantes :
. on fabrique le séparateur selon le procédé de l'invention en choisissant comme support la couche poreuse de l'une desdites électrodes, de telle sorte que l'une desdites électrodes est recouverte du séparateur du côté de sa couche poreuse, et que le séparateur comprend une face libre,
. on enduit d'un film de colle le séparateur, du côté de sa face libre, et/ou l'autre desdites électrodes, du côté de sa couche poreuse,
. on réalise l'étape d'assemblage en accolant le séparateur et l'autre desdites électrodes, et en exerçant une légère pression sur le couple électrochimique formé.

Après l'étape d'assemblage de ce quatrième mode de mise en oeuvre, on imprègne le couple électrochimique dudit électrolyte, après l'avoir éventuellement séché.

Selon une première variante de ce procédé, la colle est une solution contenant
- un polymère de même formule chimique que le polymère constituant le séparateur,

un solvant dans lequel le polymère se dissout facilement à la température de préparation de la colle, et
un non-solvant qui est miscible avec ledit solvant, qui ne dissout pas ou dissout très peu le polymère à la température de préparation de la colle, et dont la proportion est insuffisante pour provoquer la précipitation du polymère.

Selon cette première variante, on enduit d'un film de colle, de préférence, le séparateur du côté de sa face libre.

Le solvant a, de préférence, une température d'ébullition comprise entre 40 et 80°C et le non-solvant a une température d'ébullition supérieure à 100°C.

Le solvant et le non-solvant sont avantageusement les mêmes que ceux utilisés pour fabriquer le séparateur selon le procédé de l'invention.

Le couple électrochimique est éventuellement laminé, puis séché pendant 10 minutes à une température d'environ 20°C, puis séché sous vide pendant environ 12 heures.

Selon une deuxième variante de ce procédé, la colle est une pâte constituée du matériau électrochimiquement actif de la couche poreuse de l'une desdites électrodes, d'un polymère et d'un solvant qui dissout le polymère.

Selon cette deuxième variante, on enduit d'un film de colle, de préférence, ladite première électrode du côté de sa couche poreuse.

Le polymère est avantageusement le même que celui utilisé comme liant constituant la couche poreuse de ladite première électrode.

Le polymère est de préférence choisi parmi le polytétrafluoroéthylène, la carboxyméthylcellulose, l'hydroxypropylméthylcellulose, l'hydroxyéthylcellulose, l'hydroxypropylcellulose, le polyfluorure de vinylidène et ses copolymères, le polyacrylonitrile, l'acide polyacrylique, le polyacrylamide, ainsi que leurs mélanges.

Le solvant est choisi parmi l'eau et la N-méthyl-pyrrolidone.

Le couple électrochimique formé peut éventuellement être laminé, avant d'être séché pendant 10 minutes à une température d'environ 80°C.

La présente invention concerne également un procédé de fabrication d'un générateur électrochimique selon l'invention par simple assemblage.

La présente invention concerne plus précisément un procédé de fabrication d'un générateur électrochimique à électrolyte organique comprenant au moins deux électrodes et le séparateur de l'invention susceptible d'être obtenu par le procédé de l'invention, caractérisé en ce qu'on imprègne d'électrolyte lesdites électrodes et le séparateur, et en ce qu'on superpose l'une desdites électrodes, le séparateur et l'autre desdites électrodes, dans cet ordre, pour former un couple électrochimique.

Ce procédé dit "par simple assemblage" ne comporte aucune autre étape que celle de l'assemblage proprement dit du séparateur et des deux électrodes.

D'autres caractéristiques et avantages de la présente invention apparaîtront à la lecture de l'exemple de réalisation suivant et des figures annexées, donnés à titre illustratif et non limitatif.
- La figure 1 montre l'évolution, au cours d'un cyclage, de la tension d'un générateur comprenant un séparateur selon l'invention. La tension du générateur (en volts) est donnée en ordonnée, et le temps (en heures) est donné en abscisse.
- La figure 2 montre l'évolution, au cours d'un cyclage, du rapport de la capacité au Nième cycle sur la capacité à la première décharge, d'un générateur comprenant un séparateur selon l'invention. Le rapport de la capacité au Nième cycle sur la capacité à la première décharge du générateur est donnée en ordonnée, et le nombre de cycles est donné en abscisse.
- Les figures 3, 4 et 5 représentent chacune un mode de mise en oeuvre du procédé, selon l'invention, de fabrication d'un générateur électrochimique, ledit procédé étant réalisé par thermocollage.
- Les figures 6 et 7 représentent chacune un mode de mise en oeuvre du procédé, selon l'invention, de fabrication d'un générateur électrochimique, ledit procédé étant réalisé par collage.
- La figure 8 représente le couple électrochimique obtenu par l'un des modes de mise en oeuvre présentés aux figures 3, 4 et 5.
- La figure 9 représente le couple électrochimique obtenu par l'un des modes de mise en oeuvre présentés aux figures 6 et 7.

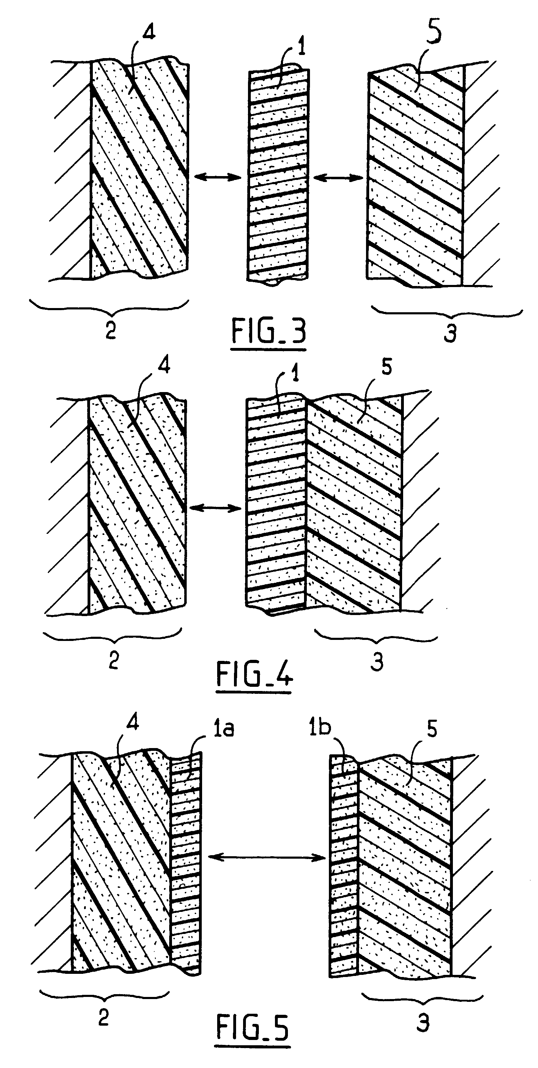

Les figures 3 à 7 représentent différents modes de mise en oeuvre d'un procédé d'assemblage d'un générateur électrochimique à électrolyte organique, comprenant :
. deux électrodes 2 et 3 comportant chacune une couche poreuse 4 ou 5 contenant un matériau électrochimiquement actif et un liant,
. le séparateur 1, 1a et 1b de l'invention susceptible d'être obtenu par le procédé de l'invention.

Les figures 3 à 5 représentent trois modes de mise en oeuvre dudit procédé d'assemblage, par thermocollage.

Selon la figure 3,
. on se munit d'un séparateur 1 selon l'invention ou on fabrique le séparateur 1 selon le procédé de l'invention en choisissant, comme support, une plaque d'un matériau chimiquement inerte que l'on sépare du séparateur 1 une fois séché,
. on imprègne les électrodes 2 et 3, du côté de leur couche poreuse 4 ou 5, avec ledit électrolyte,
. on imprègne le séparateur 1 avec ledit électrolyte,
. on accole l'électrode 2, du côté de sa couche poreuse 4, le séparateur 1 et l'électrode 3, du côté de sa couche poreuse 5, dans cet ordre.

Selon la figure 4,
. on fabrique le séparateur 1 selon le procédé de l'invention en choisissant comme support la couche poreuse 5 de l'électrode 3 de telle sorte que le séparateur 1 comprend une face libre,
. on imprègne le séparateur 1, du côté de sa face libre, avec ledit électrolyte,
. on imprègne l'autre électrode 2, du côté de sa couche poreuse 4, avec ledit électrolyte,
. on accole le séparateur 1, du côté de sa face libre, et l'électrode 2, du côté de sa couche poreuse 4.

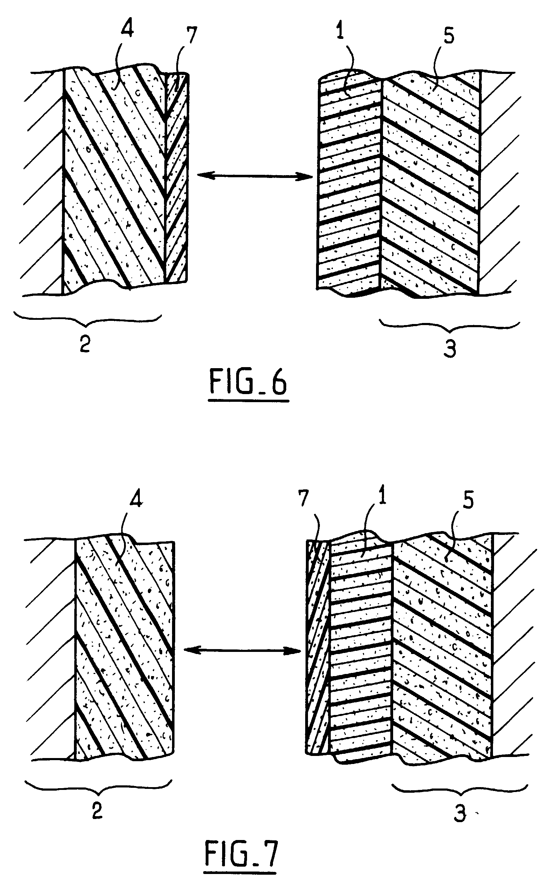

Selon la figure 5,
. on fabrique le séparateur 1a et 1b en deux étapes de manière à obtenir deux moitiés de séparateurs 1a et 1b. A cet effet, on fabrique la moitié de séparateur 1a, selon le procédé de l'invention, en choisissant comme support la couche poreuse 4 de l'électrode 2 et on fabrique la moitié de séparateur 1b, selon le procédé de l'invention, en choisissant comme support la couche poreuse 5 de l'électrode 3, de telle sorte que chaque moitié de séparateur 1a et 1b comprend une face libre,
. on imprègne chaque moitié de séparateur 1a et 1b, du côté de sa face libre, avec ledit électrolyte,
. on accole les deux moitiés de séparateur 1a et 1b, du côté de leur face libre.

Les figures 6 et 7 représentent deux modes de mise en oeuvre dudit procédé d'assemblage, par collage, selon lesquels on fabrique le séparateur 1 par le procédé de l'invention, en choisissant comme support la couche poreuse 5 de l'électrode 3, de telle sorte que le séparateur 1 comprend une face libre.

Selon la figure 6, après avoir fabriqué le séparateur comme il vient d'être décrit,
. on enduit d'un film de colle 7 la couche poreuse 4 de l'électrode 2,
. on accole le séparateur 1, du côté de sa face libre, et l'électrode 2, du côté de sa couche poreuse 4 enduite du film de colle 7.

Selon un mode de réalisation préféré, la colle est une pâte constituée du même matériau électrochimiquement actif que celui de la couche poreuse 4, d'un polymère et d'un solvant qui dissout le polymère.

Selon la figure 7, après avoir fabriqué le séparateur comme il a été décrit précédemment,
. on enduit d'un film de colle 7 le séparateur 1 du côté de sa face libre,
. on accole le séparateur, du côté de sa face libre enduite du film de colle 7, et l'électrode 2 du côté de sa couche poreuse 4.

Selon un mode de réalisation préféré, la colle est une solution contenant
un polymère de même formule chimique que le polymère constituant le séparateur 1
un solvant dans lequel le polymère se dissout facilement à la température de préparation de la colle, et
un non-solvant qui est miscible avec ledit solvant, qui ne dissout pas ou dissout très peu le polymère à la température de préparation de la colle, et dont la proportion est insuffisante pour provoquer la précipitation du polymère.

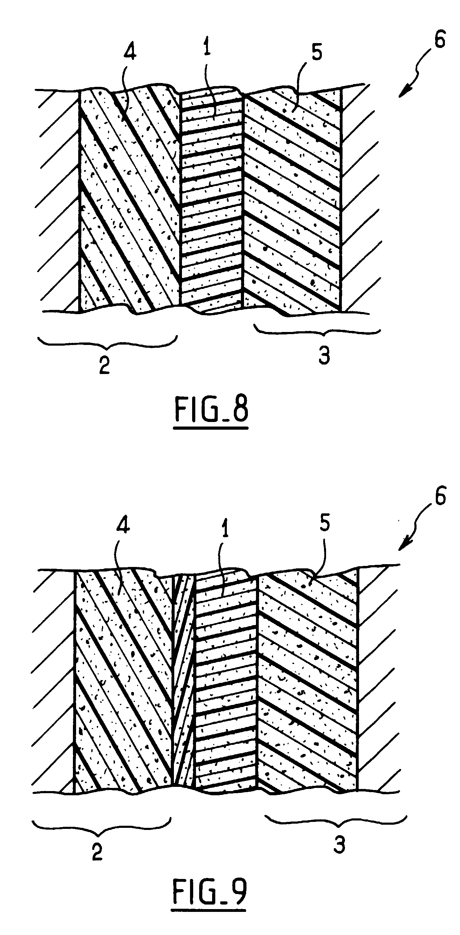

La figure 8 représente le couple électrochimique 6 obtenu selon l'un des modes de mise en oeuvre du procédé par thermocollage décrits sur les figures 3, 4 et 5.

Le couple électrochimique 6 est ensuite pressé en le portant à une température inférieure ou égale à la température de début de fusion du séparateur 1 imprégné d'électrolyte.

La figure 9 représente le couple électrochimique 6 obtenu selon l'un des modes de mise en oeuvre du procédé par collage décrits sur les figures 6 et 7.

Le couple électrochimique 6 est ensuite imprégné avec ledit électrolyte, après l'avoir séché.

### Exemple : Fabrication par simple assemblage d'un générateur comprenant un séparateur constitué de polyuréthane et de polyacrylonitrile.

On choisit une électrode positive constituée d'un collecteur de cuivre sur lequel est déposée une couche poreuse constituée de 90 % en poids de graphite et d'un liant polymère de polyfluorure de vinylidène.

On prépare une solution de polymères contenant 70 % en poids de polyuréthane (Estane® 5714 F1 de la société GOODRICH) et 30 % en poids de polyacrylonitrile (de la société ALDRICH) dans la N-méthyl-pyrrolidone. La N-méthyl-pyrrolidone représente 83 % en poids du mélange solvant-polymères.

On étale la solution de polymères préparée précédemment, sur la couche poreuse de graphite de l'électrode positive, avec une table à enduction.

L'électrode positive enduite d'un film de solution de polymères est ensuite immergée dans un non-solvant, qui est l'eau, pendant une demi-heure, puis séchée à 50°C pendant 12 heures.

Une fois séchée, l'électrode positive est recouverte du séparateur constitué d'un film polymérique poreux blanc, uniforme, de porosité 60 %.

Afin de pouvoir tester l'électrode ainsi préparée, on réalise un générateur électrochimique de type bouton, en choisissant une électrode négative, constituée d'un collecteur d'aluminium sur lequel est déposée une couche poreuse qui contient du LiNiO₂, comme matière électrochimiquement active, et un liant de polyfluorure de vinylidène.

Le séparateur recouvrant l'électrode positive et la couche poreuse de l'électrode négative sont imprégnés d'électrolyte. L'électrolyte est composé d'un mélange carbonate de propylène/carbonate d'éthylène/carbonate de diméthyle dans les proportions 1/1/3, dans lequel est dissous du LiPF₆ à la concentration 1 M.

L'électrode positive et l'électrode négative sont ensuite assemblées de telle façon que la couche poreuse de l'électrode négative et le séparateur recouvrant l'électrode positive soient en vis-à-vis.

Le couple électrochimique obtenu est placé dans une coupelle fermée par un couvercle pour former un générateur de type bouton.

Ce générateur est cyclé à un régime de C/20 en charge et C/5 en décharge.

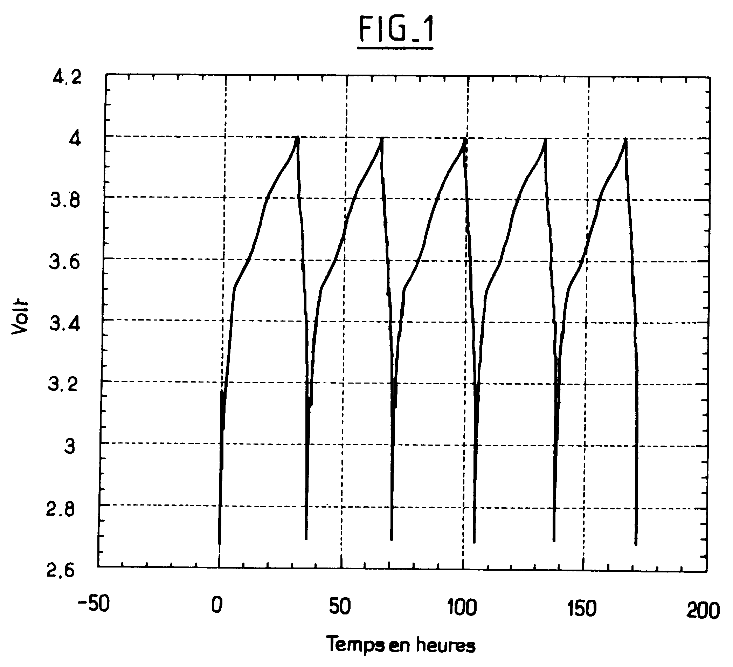

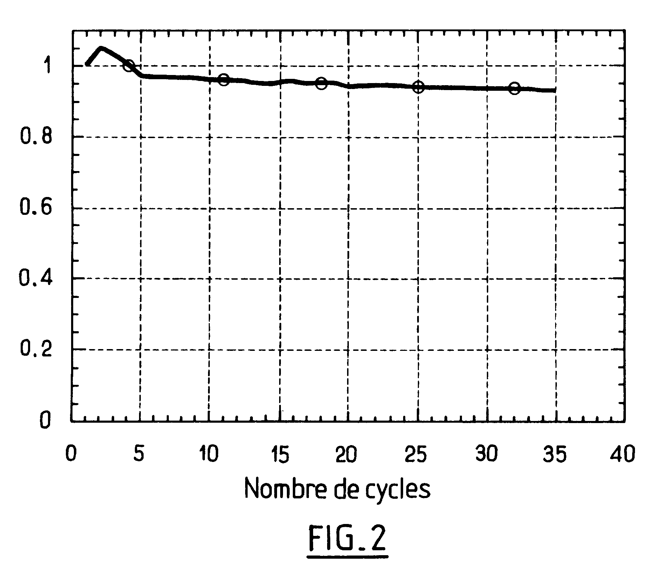

Les figures 1 et 2 montrent respectivement l'évolution de la tension et du rapport de la capacité au Nième cycle sur la capacité à la première décharge du générateur, pendant ce cyclage.

On constate que la capacité est stable au cyclage.

## Revendications

1. Séparateur polymérique pour système électrochimique à électrolyte organique, caractérisé en ce qu'il est constitué de
a) un polymère élastomère,
b) éventuellement un polymère qui gonfle avec l'électrolyte organique et avec lequel le polymère élastomère forme un alliage, et
c) éventuellement un composé inorganique,
le séparateur polymérique étant doté d'une structure microporeuse caractérisée par une porosité comprise entre 30 et 95 % et des pores d'un diamètre moyen compris entre 0,1 et 5 µm.

2. Séparateur selon la revendication 1, caractérisé en ce que le diamètre moyen des pores est de l'ordre de 1 µm.

3. Séparateur selon la revendication 1 ou 2, caractérisé en ce que le polymère élastomère est choisi parmi les polyuréthanes, un copolymère acrylonitrile/butadiène, un copolymère styrène/butadiène/styrène, un copolymère styrène/isoprène/styrène, les polyesters et les polyéthers blocs amides.

4. Séparateur selon l'une des revendications précédentes, caractérisé en ce que le polymère qui gonfle avec l'électrolyte organique est choisi parmi le polyfluorure de vinylidène et ses copolymères, le polyacrylonitrile, le polyméthacrylate de méthyle, le polyvinylformal, le polyméthacrylate de butyle et le polychlorure de vinyle.

5. Séparateur selon l'une des revendications précédentes, caractérisé en ce que le composé inorganique est la silice.

6. Séparateur selon l'une des revendications précédentes, caractérisé en ce qu'il contient 40 à 100 % de polymère élastomère, 0 à 60 % de polymère qui gonfle avec l'électrolyte et 0 à 20 % de composé inorganique.

7. Procédé de fabrication du séparateur selon l'une des revendications 1 à 6, caractérisé en ce qu'il comprend les étapes suivantes :
on élabore une solution constituée du polymère élastomère, éventuellement du polymère qui gonfle avec l'électrolyte organique, et éventuellement du composé inorganique, dissous dans un solvant commun aux deux polymères,
on étale ladite solution sur un support sous forme d'un film,
on immerge ledit film dans un non-solvant miscible avec ledit solvant,
on sèche ledit film pour éliminer ledit solvant et ledit non-solvant.

8. Procédé de fabrication du séparateur selon l'une des revendications 1 à 6, caractérisé en ce qu'il comprend les étapes suivantes :
on élabore une solution constituée du polymère élastomère, éventuellement du polymère qui gonfle avec l'électrolyte organique, et éventuellement du composé inorganique, préalablement dissous dans un solvant commun aux deux polymères, au(x)quel(s) on ajoute un non-solvant, miscible avec ledit solvant, dans une proportion insuffisante pour provoquer la précipitation du ou des polymères,
on étale ladite solution sur un support sous forme d'un film,
on sèche ledit film pour éliminer ledit solvant et ledit non-solvant.

9. Procédé selon la revendication 8, caractérisé en ce que la solution est chauffée avant d'être étalée sur le support.

10. Procédé selon la revendication 8 ou 9, caractérisé en ce que le point d'ébullition du solvant est inférieur au point d'ébullition du non-solvant.

11. Procédé selon l'une des revendications 7 à 10, caractérisé en ce que le solvant dissout le polymère élastomère, le polymère qui gonfle avec l'électrolyte organique, lorsqu'on en utilise un, et 15 à 30 % de l'alliage de polymères.

12. Procédé selon l'une des revendications 7 à 11, caractérisé en ce que le solvant est un solvant organique choisi parmi la cyclohexanone, le dichlorométhane, la diméthylacétamide (DMA), la diméthylformamide (DMF), l'hexaméthylphosphoramide (HMPA), la diméthylsulfoxyde (DMSO), le triéthylphosphate (TEP), la N-méthylpyrrolidone (NMP) et leurs mélanges.

13. Procédé selon l'une des revendications 7 à 12, caractérisé en ce que le non-solvant est choisi parmi l'eau, l'éthanol, l'éthylène glycol, le glycérol, l'acétone, le carbonate de propylène, le dichlorométhane, l'acétate d'éthyle, le butanol, le pentanol, l'acétonitrile et leurs mélanges.

14. Procédé selon l'une des revendications 7 à 13, caractérisé en ce que la solution contient au moins 50 % de solvant.

15. Procédé selon l'une des revendications 7 à 14, caractérisé en ce qu'on sèche le film en deux étapes, tout d'abord à une température comprise entre 20 et 60°C, puis à une température comprise entre 80 et 140°C.

16. Procédé selon l'une des revendications 7 à 15, caractérisé en ce que le support est une plaque d'un matériau chimiquement inerte que l'on sépare du film une fois séché.

17. Procédé selon l'une des revendications 7 à 15, caractérisé en ce que le système électrochimique à électrolyte organique comprend au moins deux électrodes comportant chacune une couche poreuse contenant un matériau électrochimiquement actif et un liant, et en ce que le support est la couche poreuse de l'une desdites électrodes.

18. Procédé selon l'une des revendications 7 à 15, caractérisé en ce que le système électrochimique à électrolyte organique comprend au moins deux électrodes comportant chacune une couche poreuse contenant un matériau électrochimiquement actif et un liant, et en ce que le support est la couche poreuse de chacune desdites électrodes.

19. Générateur électrochimique à électrolyte organique comprenant le séparateur de l'une des revendications 1 à 6, susceptible d'être obtenu par le procédé de l'une des revendications 7 à 18.

20. Générateur selon la revendication 19, caractérisé en ce qu'il comporte une anode dont le matériau électrochimiquement actif est le carbone, une cathode dont le matériau électrochimiquement actif est un oxyde de métal de transition, et un électrolyte à base d'esters cycliques.

21. Procédé de fabrication d'un générateur électrochimique à électrolyte organique, comprenant :
. au moins deux électrodes (2, 3) comportant chacune une couche poreuse (4, 5) contenant un matériau électrochimiquement actif et un liant,
. le séparateur (1 ; 1a, 1b) de l'une des revendications 1 à 6, susceptible d'être obtenu par le procédé de l'une des revendications 7 à 18,
caractérisé en ce qu'il comprend une étape d'assemblage dudit séparateur (1 ; 1a, 1b) et desdites électrodes (2, 3) pour former un couple électrochimique (6) comprenant ledit séparateur (1 ; 1a, 1b) disposé entre lesdites deux électrodes (2, 3) du côté de leur couche poreuse (4, 5).

22. Procédé selon la revendication 21, caractérisé en ce qu'il comprend les étapes suivantes :
. on imprègne lesdites électrodes (2, 3), du côté de leur couche poreuse (4, 5) et on imprègne le séparateur (1), avec ledit électrolyte,
. on réalise ladite étape d'assemblage en accolant le séparateur (1) avec l'une et l'autre desdites électrodes (2, 3), du côté de leur couche poreuse (4, 5).

23. Procédé selon la revendication 22, caractérisé en ce que le séparateur (1) est fabriqué selon la revendication 16.

24. Procédé selon la revendication 21, caractérisé en ce qu'il comprend les étapes suivantes :
. on fabrique le séparateur selon la revendication 17, de telle sorte que l'une desdites électrodes (3) est recouverte du séparateur (1) du côté de sa couche poreuse (5), et que le séparateur (1) comprend une face libre,
. on imprègne le séparateur (1) du côté de sa face libre avec ledit électrolyte,
. on imprègne l'autre desdites électrodes (2) du côté de sa couche poreuse (4) avec ledit électrolyte,
. on réalise l'étape d'assemblage en accolant le séparateur (1), du côté de sa face libre, et l'autre desdites électrodes (2), du côté de sa couche poreuse (4).

25. Procédé selon la revendication 21, caractérisé en ce qu'il comprend les étapes suivantes :
. on fabrique le séparateur (1) selon la revendication 18, de telle sorte que chacune desdites deux électrodes (2, 3) est recouverte d'une moitié de séparateur (1a, 1b) du côté de sa couche poreuse (4, 5), et que chaque moitié de séparateur (1a, 1b) comprend une face libre,
. on imprègne chaque moitié de séparateur (1a, 1b), du côté de sa face libre, avec ledit électrolyte,
. on réalise l'étape d'assemblage en accolant les moitiés de séparateur (1a, 1b) du côté de leur face libre.

26. Procédé selon l'une des revendications 22 à 25, caractérisé en ce qu'après l'étape d'assemblage, on presse le couple électrochimique (6) en le portant à une température inférieure ou égale à la température de début de fusion du séparateur (1) imprégné d'électrolyte.

27. Procédé selon la revendication 21, caractérisé en ce qu'il comprend les étapes suivantes :
. on fabrique le séparateur (1) selon la revendication 17, de telle sorte que l'une desdites électrodes (3) est recouverte du séparateur (1) du côté de sa couche poreuse (5), et que le séparateur (1) comprend une face libre,
. on enduit d'un film de colle (7) le séparateur (1), du côté de sa face libre, et/ou l'autre desdites électrodes (2), du côté de sa couche poreuse (4),
. on réalise l'étape d'assemblage en accolant le séparateur (1) et l'autre desdites électrodes (2), et en exerçant une légère pression sur le couple électrochimique (6) formé.

28. Procédé selon la revendication 27, caractérisé en ce qu'après l'étape d'assemblage, on imprègne le couple électrochimique (6) dudit électrolyte, après l'avoir éventuellement séché.

29. Procédé selon la revendication 27 ou 28, caractérisé en ce que la colle est une solution contenant
un polymère de même formule chimique que le polymère constituant le séparateur (1),
un solvant dans lequel le polymère se dissout facilement à la température de préparation de la colle, et
un non-solvant qui est miscible avec ledit solvant, qui ne dissout pas ou dissout très peu le polymère à la température de préparation de la colle, et dont la proportion est insuffisante pour provoquer la précipitation du polymère.

30. Procédé selon la revendication 29, caractérisé en ce qu'on enduit d'un film de colle (7) le séparateur (1), du côté de sa face libre.

31. Procédé selon la revendication 29 ou 30, caractérisé en ce que le solvant a une température d'ébullition comprise entre 40 et 80°C et le non-solvant a une température d'ébullition supérieure à 100°C.

32. Procédé selon l'une des revendications 29 à 31, caractérisé en ce que le couple électrochimique (6) est séché pendant 10 minutes à une température d'environ 20°C, puis séché sous vide pendant environ 12 heures.

33. Procédé selon la revendication 27 ou 28, caractérisé en ce que la colle est une pâte constituée du matériau électrochimiquement actif de la couche poreuse (4) de l'une première desdites électrodes (2), d'un polymère et d'un solvant qui dissout le polymère.

34. Procédé selon la revendication 33, caractérisé en ce qu'on enduit d'un film de colle (7) ladite première électrode (2) du côté de sa couche poreuse (4).

35. Procédé selon la revendication 33 ou 34, caractérisé en ce que le polymère est le même que celui utilisé comme liant constituant la couche poreuse (4) de ladite première électrode (2).

36. Procédé selon l'une des revendications 33 à 35, caractérisé en ce que le couple électrochimique (6) est séché pendant 10 minutes à une température d'environ 80°C.
